# EUROPÄISCHE PATENTANMELDUNG

(11) **EP 3 351 547 A1**
(43) Veröffentlichungstag der Anmeldung: **25.07.2018**
(21) Anmeldenummer: 17152597.5
(22) Anmeldetag: 23.01.2017
(51) Int. Cl.: C07F 7/04, C08G 77/02

(54) **VERFAHREN ZUR HERSTELLUNG EINER 2-ETHYLHEXYLSILIKAT-HALTIGEN ZUSAMMENSETZUNG**

(71) Anmelder: Evonik Degussa GmbH, 45128 Essen (DE)
(72) Erfinder: KRAFCZYK, Roland, 79618 Rheinfelden (DE); KÖPFER, Alexander, 79872 Bernau im Schwarzwald (DE); ROSENSTINGL, Sebastian, 79539 Lörrach (DE); WASSMER, Christian, 79688 Hausen (DE); STANDKE, Burkhard, 79540 Lörrach (DE)

(57) **Zusammenfassung**

Die vorliegende Erfindung betrifft ein Verfahren zur Herstellung einer 2-Ethylhexylsilikat-haltigen Zusammensetzung, indem man Siliciumtetrachlorid mit 2-Ethylhexanol und Wasser umsetzt, den bei der Umsetzung freiwerdenden Chlorwasserstoff und überschüssiges 2-Ethylhexanol aus dem Reaktionsgemisch durch Destillation entfernt und die 2-Ethylhexylsilikat-haltigen Zusammensetzung als Sumpfprodukt der Destillation gewinnt.

## Beschreibung

Die vorliegende Erfindung betrifft eine Zusammensetzung mit einem sehr hohen Anteil an 2-Ethylhexylsilikat sowie ein spezielles Verfahren zu deren Herstellung, wobei man Siliciumtetrachlorid mit 2-Ethylhexanol und Wasser umsetzt und den bei der Umsetzung freiwerdenden Chlorwasserstoff aus dem Reaktionsgemisch bzw. Produkt entfernt.

Polykieselsäurealkylester, auch Alkylsilikate genannt, können nach chemischem Verständnis unter anderem durch allgemeine Formeln wie RO-[(RO-)₂Si-O]ₙ-R sowie [-Si(-OR)₂O_{2/2}-]ₙ mit n>1 und R=Alkyl wiedergegeben werden und sind als solche lange bekannt, beispielsweise in Form von so genanntem Ethylsilikat.

DE-AS-1010739 lehrt die Herstellung von Polykieselsäureestern durch Umsetzung von Tetraethoxysilan mit höheren Alkoholen wie Cyclohexanol, Methylcyclohexanol sowie Phenolen in Gegenwart einer wasserfreien oder wässrigen Carbonsäure als Kondensationsmittel, beispielsweise Essig- oder Ameisensäure. Die bei der Umsetzung entstehenden flüchtigen Verbindungen, wie niederer Alkohol, wurden abdestilliert.

US 2846459 offenbart die Herstellung bromierter Alkylsilikate durch Umesterung, wobei in den Beispielen von Polykieselsäureethylester ausgegangen und dieser u.a. mit einem Gemisch aus 2,3-Dibrompropan-1-ol und 2-Ethylhexanol umgesetzt wurde. Dabei kamen Natriummethanolat bzw. ein Gemisch aus Natriummethanolat und Kaliumcarbonat als Katalysator zum Einsatz. Auch hier wurden die nach der Umsetzung noch leicht flüchtigen Verbindungen, wie niederer Alkohol, abdestilliert und so entsprechende bromierte Alkylsilikate erhalten.

Aus Beispiel 7 der EP1035184A1 ist die Umsetzung von 100 g Ethylsilikat mit 18 g 2-Ethylhexanol in Gegenwart von Schwefelsäure als Katalysator zu entnehmen. Die Umsetzung erfolgte über 1 Stunde bei 120 °C. Die danach noch vorliegenden leicht flüchtigen Bestandteile wurden abdestilliert. Dabei wurde ein Alkylsilikat erhalten, das noch einen Gehalt von 94 Mol-% Ethyl und ein Molekulargewichtgewicht von 1750 g/mol aufwiest. Hier erfolgte nur eine Teilumesterung mit geringer Ausbeute. Die Weiterverarbeitung des Produkts erfolgte in THF. Dieses Beispiel lehrt, dass hier ein Ethylsilikat, das als Ausgangsstoff zunächst aufwändig herzustellen ist, eingesetzt und unter Zusatz eines Katalysators und 2-Ethylhexanol umgesetzt wird, wobei trotz des aufwändigen Verfahrens die Um- bzw. Veresterung mit dem langkettigen Alkohol nur schwer und unvollständig abläuft.

Der vorliegenden Erfindung lag daher die Aufgabe zugrunde, eine Zusammensetzung mit einem möglichst hohen Gehalt an 2-Ethylhexylsilikat (nachfolgend auch kurz als Produkt bzw. Zielprodukt bezeichnet) einschließlich eines möglichst einfachen und wirtschaftlichen Herstellverfahrens dafür bereitzustellen.

Die gestellt Aufgabe wird erfindungsgemäß entsprechend den Merkmalen in den hier vorliegenden Ansprüchen vorteilhaft gelöst.

So wurde in überraschender Weise ein spezielles Verfahren zur Herstellung einer 2-Ethylhexylsilikat-haltigen Zusammensetzung mit einem hohen Anteil an 2-Ethylhexylsilikat gefunden, indem man Siliciumtetrachlorid und 2-Ethylhexanol zusammenbringt, unter Durchmischung aufheizt, reagieren lässt und den entstehenden Chlorwasserstoff entweichen lässt bzw. durch Erhitzen austreibt und abführt, geeigneterweise nach Abkühlen des so erhaltenen Reaktionsgemischs 2-Ethylhexanol und Wasser zusetzt, erwärmt und reagieren lässt. Im Anschluss an die Umsetzung wird nicht umgesetztes 2-Ethylhexanol und entstandener Chlorwasserstoff aus dem erhaltenen Reaktionsprodukt bzw. Produktgemisch destillativ entfernt, optional unter vermindertem Druck (Vakuum). So erhält man die erfindungsgemäße Zusammensetzung (Produkt) als so genanntes Sumpfprodukt nach Destillation in einfacher und wirtschaftlicher Weise und in hervorragender Ausbeute.

Gegenstand der vorliegenden Erfindung ist somit ein Verfahren zur Herstellung einer 2-Ethylhexylsilikat-haltigen Zusammensetzung, indem man
- in Schritt A Siliciumtetrachlorid und 2-Ethylhexanol unter Durchmischung erhitzt, reagieren lässt und den entstehenden Chlorwasserstoff entweichen lässt,
- anschließend in Schritt B dem in Schritt A erhaltenen Reaktionsgemisch 2-Ethylhexanol und Wasser hinzugibt, unter Durchmischung erhitzt, reagieren lässt und
- nachfolgend in Schritt C noch vorliegenden Chlorwasserstoff sowie überschüssiges 2-Ethylhexanol durch Destillation aus dem Reaktionsprodukt aus Schritt B entfernt und das erhaltene Sumpfprodukt der Destillation als 2-Ethylhexylsilikat-haltige Zusammensetzung gewinnt.

So setzt man beim erfindungsgemäßen Verfahren Siliciumtetrachlorid und 2-Ethylhexanol in Summe in einem molaren Verhältnis von 1 : 3,5 bis 10, bevorzugt 1 : 4,0 bis 6, besonders bevorzugt 1 : 4,1 bis 4,5, insbesondere 1 : 4,3, ein, wobei man in Schritt A 30 bis 70 %, vorzugsweise 40 bis 60 %, der hier in Summen angeführten Menge an 2-Ethylhexanol einsetzt. Dabei dosiert man in Schritt A Siliciumtetrachlorid und 2-Ethylhexanol bevorzugt gleichzeitig in das Reaktionsgefäß und erhitzt unter Durchmischung.

Weiter setzt man beim erfindungsgemäßen Verfahren gemäß Schritt B Wasser in einem molaren Verhältnis von Siliciumtetrachlorid zu Wasser von 1 : 0,5 bis 2,0, bevorzugt 1 : 0,9 bis 1,1, besonders bevorzugt 1 : 1,00 bis 1,04, insbesondere 1 : 1,02, ein. So kann man den Oligomerisierungsgrad des erfindungsgemäß hergestellten 2-Ethylhexyl-silikats über die eingesetzte Wassermenge vorteilhaft einstellen. Ferner dosiert man in Schritt B Wasser und 2-Ethylhexanol vorzugsweise gleichzeitig, besonders bevorzugt als ein Gemisch aus Wasser und 2-Ethylhexanol.

Beim erfindungsgemäßen Verfahren führt man die (Umsetzungs-)Schritte A und B vorteilhaft bei einer Temperaturerhöhung von 20 bis 180 °C, bevorzugt von 30 bis 160 °C durch.

Darüber hinaus ist es vorteilhaft, wenn beim erfindungsgemäßen Verfahren die Schritte A und B über einen Zeitraum von 2 bis 24 Stunden, bevorzugt von 4 bis 16 Stunden, durchführt.

Beim erfindungsmäßen Verfahren kann der bei der Umsetzung freiwerdende Chlorwasserstoff vorteilhaft durch Erhitzen der Reaktions- bzw. Produktmischung ausgetrieben werden. Optional kann zur Unterstützung des Austreibens Stickstoff durch das Reaktionsgemisch geblasen werden und/oder "Vakuum" angelegt werden.

Das Produkt, die erfindungsgemäße Zusammensetzung, gewinnt man somit vorteilhaft als farblos bis gelbliche, leicht viskose Flüssigkeit nach Destillation gemäß Schritt C im Sumpf der Apparatur.

Beim erfindungsgemäßen Verfahren gewinnt man so gemäß Schritt C das entsprechend erhaltene Sumpfprodukt als eine 2-Ethylhexylsilikat-haltige Zusammensetzung vorteilhaft mit einem Gehalt an 2-Ethylhexylsilikat von ≥ 90 Gew.-%, bevorzugt ≥ 95 Gew.-%.

Gegenstand der vorliegenden Erfindung sind daher ebenfalls Zusammensetzungen mit einem Gehalt an 2-Ethylhexylsilikat von ≥ 90 Gew.-% als solche, vorzugsweise solche mit einem Gehalt an 2-Etylhexylsilikat von ≥ 95 Gew.-%, bezogen auf die Zusammensetzung, bzw. die nach dem erfindungsgemäßen Verfahren erhältlich sind.

Darüber hinaus weisen erfindungsgemäße Zusammensetzungen bevorzugt einen Gehalt an 2-Ethylhexanol von < 1 Gew.-%, bezogen auf die Zusammensetzung, auf. Somit zeichnen sich erfindungsgemäße Zusammensetzungen auch aus ökologischer Sicht durch einen nur sehr geringen Anteil an VOC (Volatile Organic Compounds = Flüchtige Organische Verbindungen) aus.

Im Allgemeinen kann man das erfindungsgemäße Verfahren wie folgt ausführen:
In der Regel dosiert man in einem ersten Schritt A Siliciumtetrachlorid und 2-Ethylhexanol gleichzeitig in ein Reaktionsgefäß, die Dosierung erfolgt geeigneterweise unter Durchmischung, wobei man das Reaktionsgemisch leicht erwärmen kann, um die Umsetzung in Gang zu bringen. Ein solches Reaktionsgefäß ist vorteilhaft mit Zuführungen zur Eduktdosierung, Rührer, Heizung, Temperaturkontrolle/-regelung, Rückflusskühler und Brücke mit Vorlage ausgestattet. Das gleichzeitige Dosieren der Edukte kann unter stetem Zutropfen erfolgen. In der Regel setzt dabei eine leicht exotherme Reaktion der beiden Edukte ein. Nach beendeter Eduktdosierung erhitzt man das Reaktionsgemisch bevorzugt schrittweise von etwa 20 bis 40 °C auf etwa 150 bis 180 °C innerhalb von 4 bis 10 Stunden, insbesondere etwa 7 Stunden. Dabei entweicht bei der Umsetzung entstandener Chlorwasserstoff und kann zumindest anteilig über die Gasphase aus dem System abgeführt werden. Anschließend lässt man das dann vorliegende Reaktionsgemisch geeigneterweise zumindest etwas abkühlen und kann in einem Schritt B, vorzugsweise nach Erkalten auf Raumtemperatur, eine weitere Menge an 2-Ethylhexanol und die vorgesehene Menge an (Dest.- bzw. VE-)Wasser zudosieren und besonders vorzugsweise unter Durchmischung über 8,5 Stunden auf etwa 100 °C erwärmt. Am Ende der Umsetzung legt man bevorzugt Vakuum an, dabei kann man zusätzlich erwärmen, und befreit in einem weiteren Schritt C das erhaltene Produktgemisch bzw. Reaktionsprodukt aus Schritt B durch eine Destillation unter vermindertem Druck von flüchtigen Bestandteilen, d.h. im Wesentlichen von nicht umgesetztem 2-Ethylhexanol sowie bei der Umsetzung entstandenen Chlorwasserstoff. So erhält man nach der Destillation als Sumpfprodukt in vorteilhaft einfacher und wirtschaftlicher Weise eine Zusammensetzung mit einem außerordentlich hohen an Teil an 2-Ethylhexylsilikat.

Überraschend und in besonders vorteilhafter Weise erzielt man bei der Durchführung des erfindungsgemäßen Verfahrens ausgehend von Siliciumtetrachlorid und 2-Ethylhexanol als einem langkettigen Alkohol in einem Ansatz bzw. technischen Verfahren nahezu gleichzeitig eine praktisch vollständige Veresterung einschließlich Oligomerisierung (Hydrolyse und Kondensation) mit insbesondere einer Ausbeute von > 95 % und ist somit in die günstige Lage versetzt, ein entsprechendes Produkt mit einem hohen Gehalt an 2-Ethylhexylsilikat bereitstellen zu können. So kann man nach dem erfindungsgemäßen Verfahren vorteilhaft auch großtechnisch eine Zusammensetzung mit einem hohen Gehalt an 2-Ethylhexylsilikat von > 90 Gew.-%, bevorzugt > 95 % als Zielprodukt erhalten.

Erfindungsgemäße erhältliche Zusammensetzungen können zum Beispiel -aber nicht ausschließlichals Kopplungsreagenz bei der Herstellung von funktionellen Polymeren, wie Butadienkautschuk oder beim Lösungs-Styrol-Butadien-Kautschuk, vorteilhaft eingesetzt bzw. verwendet werden.

Gegenstand der vorliegenden Erfindung ist daher auch die Verwendung einer erfindungsgemäßen Zusammensetzung, einer erfindungsgemäßen hergestellten bzw. erhältlichen Zusammensetzung als Kopplungsreagenz bei der Herstellung von funktionellen Polymeren, insbesondere bei der Herstellung von Butadienkautschuk sowie von Lösungs-Styrol-Butadien-Kautschuk.

Die vorliegende Erfindung wird durch die nachfolgenden Beispiele näher erläutert, ohne den Gegenstand der Erfindung zu beschränken:

### Beispiele:

### Verwendete Chemikalien:

Siliciumtetrachlorid, Evonik Resource Efficiency GmbH
2-Ethylhexanol, Sigma-Aldrich
Destilliertes Wasser, Evonik Resource Efficiency GmbH

### Analytische Methoden:

NMR-Messungen:
Instrument: Bruker
Frequenz: 100.6 MHz (¹³C-NMR)
Scans: 1024 (¹³C-NMR)
Temperatur: 296 K
Lösungsmittel: CDCl₃
Standard: Tetramethylsilan

### Beispiel 1:

Siliciumtetrachlorid (30,00 g, 0,1766 mol, 1,00 eq.) und 2-Ethylhexanol (98,89 g, 0,7593 mol, 4,30 eq.) wurden parallel in einen 250 ml Rundkolben getropft. Die Sumpftemperatur erhöhte sich hierbei von Raumtemperatur auf 35 °C. Als die erste Exothermie verklungen war und die Reaktionstemperatur sank, wurde mit einem 30 °C warmen Ölbad erwärmt und das parallele Zutropfen zu Ende geführt. Nach vollständiger Zugabe wurde 20 min auf 40 °C erhitzt, dann 20 min auf 50 °C, dann stufenweise in 10 °C-Schritten in sieben Stunden auf 150 °C. Es wurde auf Raumtemperatur erkalten gelassen. Es wurde 2-Ethylhexanol (52,67 g, 0,4044 mol, 2,29 eq.) und destilliertes Wasser (3,23 g, 0,1794 mol, 1,02 eq.) zugegeben und 8.5 h auf 100 °C erwärmt. Das erhaltene Reaktionsprodukt der Umsetzung wurde unter vermindertem Druck destillativ von den flüchtigen Bestandteilen befreit. So wurde im Sumpf der Destillationseinheit ein gelbliches Öl (45,2 g) als Produkt erhalten. Das Produkt wurde mittels ¹³C-NMR analysiert:
¹³C-NMR (100 MHz, CDCl₃): δ = 65.4-65.9 (m, 1C), 41.2-41.8 (m, 1C), 29.7-30.2 (m, 1C), 28.9-29.3 (br s, 1C), 22.7-23-5 (m, 2Cs), 13.9-14.3 (s, 1C), 10.8-11.2 (m, 1 C) ppm.

Die an dem erhaltenen Produkt durchgeführte ¹³C-NMR Analyse belegt, dass kein freies 2-Ethylhexanol im Produkt mehr nachzuweisen ist. Der Gehalt an 2-Ethylhexanol im Produkt liegt somit bei <<1 Gew.-%, ferner beträgt der Gehalt an 2-Ethylhexylsilikat im Produkt > 95 Gew.-%. Die erfindungsgemäße Umsetzung erfolgt hinsichtlich Zielprodukt praktisch vollständig. So kann durch das erfindungsgemäße Verfahren in einfacher und wirtschaftlicher Weise durch gleichzeitige Veresterung und Oligomerisierung ausgehend von Siliciumtetrachlorid und dem langkettigen, an sich eher reaktionsträgen 2-Ethylhexanol in einem Verfahrensansatz vorteilhaft ein Produkt mit einem sehr hohen Anteil an 2-Ethylhexylsilikat bereitgestellt werden.

## Patentansprüche

1. Verfahren zur Herstellung einer 2-Ethylhexylsilikat-haltigen Zusammensetzung, indem man
- in Schritt A Siliciumtetrachlorid und 2-Ethylhexanol unter Durchmischung erhitzt, reagieren lässt und den entstehenden Chlorwasserstoff entweichen lässt,
- anschließend in Schritt B dem in Schritt A erhaltenen Reaktionsgemisch 2-Ethylhexanol und Wasser hinzugibt, unter Durchmischung erhitzt, reagieren lässt und
- nachfolgend in Schritt C noch vorliegenden Chlorwasserstoff sowie überschüssiges 2-Ethylhexanol durch Destillation aus dem Reaktionsprodukt aus Schritt B entfernt und das erhaltene Sumpfprodukt der Destillation als 2-Ethylhexylsilikat-haltige Zusammensetzung gewinnt.

2. Verfahren nach Anspruch 1, **dadurch gekennzeichnet,**
**dass** man Siliciumtetrachlorid und 2-Ethylhexanol in Summe in einem molaren Verhältnis von 1 : 3,5 bis 10, bevorzugt 1 : 4,0 bis 6, besonders bevorzugt 1 : 4,1 bis 4,5 einsetzt, wobei man in Schritt A 30 bis 70 %, vorzugsweise 40 bis 60 %, der hier in Summen angeführten Menge an 2-Ethylhexanol einsetzt.

3. Verfahren nach Anspruch 1 und 2,
wobei man gemäß Schritt B Wasser in einem molaren Verhältnis von Siliciumtetrachlorid zu Wasser von 1 : 0,5 bis 2,0, bevorzugt 1 : 0,9 bis 1,1, besonders bevorzugt 1 : 1,00 bis 1,04 einsetzt.

4. Verfahren nach einem der Ansprüche 1 bis 3,
wobei man in Schritt A Siliciumtetrachlorid und 2-Ethylhexanol gleichzeitig in das Reaktionsgefäß dosiert und dabei unter Durchmischung erhitzt.

5. Verfahren nach einem der Ansprüche 1 bis 4,
wobei man in Schritt B Wasser und 2-Ethylhexanol gleichzeitig dosiert, vorzugsweise als ein Gemisch aus Wasser und 2-Ethylhexanol.

6. Verfahren nach einem der Ansprüche 1 bis 5,
wobei man die (Umsetzungs-)Schritte A und B bei einer Temperaturerhöhung von 20 bis 180 °C, bevorzugt von 30 bis 160 °C durchführt

7. Verfahren nach einem der Ansprüche 1 bis 6,
wobei die Schritte A und B über einen Zeitraum von 2 bis 24 Stunden, bevorzugt von 4 bis 16 Stunden durchführt.

8. Verfahren nach einem der Ansprüche 1 bis 7,
wobei man das gemäß Schritt C erhaltene Sumpfprodukt als eine 2-Ethylhexylsilikat-haltige Zusammensetzung mit einem Gehalt an 2-Ethylhexylsilikat von ≥ 90 Gew.-%, bevorzugt ≥ 95 Gew.-%, gewinnt.

9. Zusammensetzung mit einem Gehalt an 2-Ethylhexylsilikat von ≥ 90 Gew.-% erhältlich nach einem der Ansprüche 1 bis 8.

10. Zusammensetzung nach Anspruch 9 mit einem Gehalt an 2-Etylhexylsilikat von ≥ 90 Gew.-%, vorzugsweise ≥ 95 Gew.-%, bezogen auf die Zusammensetzung.

11. Zusammensetzung nach Anspruch 9 oder 10 mit einem Gehalt an 2-Ethylhexanol von ≤ 1 Gew.-%, bezogen auf die Zusammensetzung.

12. Verwendung einer Zusammensetzung nach einem der Ansprüche 9 bis 11 oder hergestellt nach einem der Ansprüche 1 bis 8 als Kopplungsreagenz bei der Herstellung von funktionellen Polymeren, insbesondere bei der Herstellung von Butadienkautschuk sowie von Lösungs-Styrol-Butadien-Kautschuk.
